# DEMANDE DE BREVET EUROPEEN

(11) **EP 1 605 241 A1**
(43) Date de publication de la demande: **14.12.2005**
(21) Numéro de dépôt: 04447138.1
(22) Date de dépôt: 09.06.2004
(51) Int. Cl.: G01M 11/02

(54) **Appareil pour le controle des pièces transparentes ou réflechissantes**

(71) Demandeur: Automation & Robotics, 4800 Verviers (BE)
(72) Inventeur: Laurent, Christian, 4800 Verviers (BE)
(74) Mandataire: Van Malderen, Michel

(57) **Abrégé**

La présente invention se rapporte à un appareil pour le contrôle optique d'un objet transparent, translucide ou réfléchissant, y compris présentant une réflexion diffusante, caractérisé en ce que les moyens d'éclairage comprennent des moyens électro-optiques programmables, par example de type officheur à cristaux liquides (LCD) pour produire une source de lumière variable dans l'espace et dans le temps, lesdits moyens programmables étant aptes à générer un motif, une image dudit motif pouvant être obtenue par réflexion ou transmission via ledit objet observable, par example une caméra linéaire ou matricielle au moyen d'un système de vision artificielle.

## Description

### Objet de l'invention

La présente invention se rapporte à un appareil convenant pour :
- la détection de défauts ou la localisation de marquages semi-visibles présents dans des pièces optiques transparentes ou réfléchissantes, par exemple la détection de déformations et défauts d'aspect ("cosmetic control");
- la mesure des propriétés optiques de telles pièces optiques (par exemple caractéristiques de divergence, réfraction, puissance, courbure, etc.).

Un exemple de domaine d'application de l'invention est celui du contrôle de lentilles optiques et de tous produits transparents et/ou réfléchissants dans l'industrie ophtalmique.

On définit un produit réfléchissant comme étant a priori un produit dont la surface se comporte vis-à-vis de la lumière incidente selon la loi de la réflexion spéculaire (en anglais, specular *reflection*)*.*

L'invention se rapporte en outre au contrôle d'aspect de produits translucides et/ou présentant une réflexion diffuse.

### Arrière-plan technologique, état de la technique et problème technique à résoudre

### Détection et caractérisation des défauts d'aspects

Pour la détection automatique de défauts en vision artificielle, on connaît et on utilise de nombreuses méthodes, mettant en oeuvre des systèmes d'éclairage présentant des propriétés adaptées au type de défaut particulier à détecter. On peut citer par exemple les dispositifs à champ clair et à champ noir, les systèmes de projection, les systèmes à observation d'alternances par exemple sous forme de bandes noires et blanches, les méthodes de schlieren, dite du couteau ("knife edge"), etc.

Ces dispositifs se caractérisent souvent par la nécessité de mouvement, soit des pièces à observer, soit des dispositifs d'éclairage (FR-A-98 14417, EP-A-556 655, "Machine Vision System for specular Surface Inspection : Use of Simulation Process as a Tool for Design and Optimization", R. SEULIN et al., Laboratoire Le2i, QCAV Journées 21-23 mai 2001, Le Creusot, France) ou encore par des dispositifs appropriés de projection (EP-A-856 728). On obtient ainsi des systèmes dont la configuration est fixée par l'objectif à atteindre et les moyens mécaniques, géométriques ou optiques mis en oeuvre.

### Mesure des propriétés optiques

Pour la mesure des caractéristiques optiques, la situation est assez similaire. On peut ainsi trouver de nombreux types de dispositifs :
a) on rencontre par exemple un premier type d'appareillage équipé de systèmes de projection avec masque(s) de forme appropriée pour la mesure de puissance optique, selon la méthode dite "de Hartmann" et comprenant des dispositifs de mesure de la lumière projetée soit sur un écran, soit directement sur un capteur. Ces dispositifs permettent, par calcul à partir de la déformation du motif associé au masque, de procéder à l'analyse du front d'onde obtenu après transmission ou réflexion sur le composant à étudier. Ce dernier peut être disposé dans le dispositif de projection avant ou après interception de la lumière par le masque ;
b) par ailleurs, on peut aussi trouver notamment des dispositifs permettant simplement le calcul des propriétés optiques par analyse du grossissement, en général anisotrope et non homogène, de l'image d'un motif (appelé "mire") observé par réfraction ou réflexion sur la surface de l'objet à examiner, selon que celui-ci est respectivement transparent ou réfléchissant. Ainsi, la Demanderesse a développé un appareil pour la détermination de la cartographie de puissance optique de lentilles. Ce produit appelé Lensmapper™ est commercialisé pour l'industrie ophtalmique depuis 1994. Le principe de cet appareil est proche de l'objet du brevet US-A-6,392,754 détenu par Innomess GmbH, Marl (DE) pour des surfaces réfléchissantes et de celui de la demande européenne EP-A-1 061 329, détenu par une firme, indépendante de la Demanderesse, travaillant essentiellement pour l'industrie ophtalmique.

Le problème qui se pose dès lors, tant pour la détection de défauts de pièces optiques, que pour la détermination des propriétés optiques de composants, est que les appareils de mesure existants sont confinés, de par leur configuration relativement rigide, à une gamme restreinte d'applications.

Un besoin se fait donc sentir pour la conception d'un appareil de mesure de précision ou de détection de défauts d'aspect qui soit flexible en fonction de l'application choisie dans une large gamme (par exemple détection d'un grand nombre de types de défauts différents) et qui permette la mise en oeuvre "à la carte" de différentes méthodes d'éclairage (par exemple champ noir ou clair, alternance de franges noires/blanches, projection de points, etc.).

### Buts de l'invention

La présente invention vise à fournir un appareil permettant de détecter dans des pièces optiques de précision des défauts de toute nature, dont la dimension caractéristique s'étend dans une très large gamme, typiquement entre le micron et plusieurs millimètres pour la plupart des lentilles.

L'invention a notamment pour but de fournir un appareil pour la mise en évidence de multiples classes de défauts d'aspect ou discontinuités structurelles telles que marquages, contours, etc., ce qui, suite à leur interaction spécifique éventuellement fortement anisotrope avec la lumière et suite à leur orientation, peut requérir des configurations très variables du dispositif d'éclairage utilisé et donc une grande adaptabilité de celui-ci.

L'invention a également pour but de fournir un appareil flexible de mesure des caractéristiques de composants optiques, en particulier dans l'industrie ophtalmique.

### Principaux éléments caractéristiques de l'invention

La présente invention se rapporte à un appareil pour l'inspection optique ou la mesure de propriétés optiques, géométriques ou colorimétriques d'un objet transparent, translucide ou réfléchissant, y compris présentant une réflexion diffusante. En particulier cet appareil est destiné à être mis en oeuvre pour la détection de défauts déviant ou diffusant la lumière, la lecture de marquages moulés ou gravés, le relevé de discontinuités à la surface de l'objet, le relevé du contour de l'objet ou pour effectuer une mesure de propriétés optiques ou géométriques de l'objet, éventuellement anisotropes, telles que sa puissance optique, sa courbure ou sa couleur.

L'appareil de l'invention comprend des moyens d'éclairage et un système de vision artificielle associé, ledit objet inspecté ou mesuré étant spatialement interposé entre les moyens d'éclairage et le système de vision artificielle.

Selon l'invention, les moyens d'éclairage comprennent des moyens électro-optiques programmables pour produire une source de lumière flexible, c'est-à-dire variable dans l'espace, selon une, deux ou trois dimensions, variable dans le temps, de préférence variable du point de vue de son intensité en fonction de la longueur d'onde, et précise, lesdits moyens programmables étant aptes à générer un motif, tel qu'une mire, un fond lumineux ou une pluralité de points ou taches de taille adaptée aux caractéristiques de l'objet examiné, une image dudit motif pouvant être obtenue par réflexion ou transmission via ledit objet observable au moyen du système de vision artificielle.

Les moyens électro-optiques programmables comprennent avantageusement un modulateur de lumière spatial (SLM) 1D, 2D ou 3D, de préférence de type afficheur à cristaux liquides (LCD).

Le système de vision artificielle comprend par exemple un capteur d'images ou une caméra linéaire ou matriciel(le), couplé (e) à un système de traitement d'images, ou encore un écran de projection directe ou indirecte.

De préférence, ladite caméra comprend un objectif ou non et est digitale de type CCD ou CMOS.

Dans le cas de l'utilisation de la projection d'un fond lumineux, celui-ci comporte avantageusement une intensité et au moins une couleur, de préférence variables en fonction du temps et/ou de la position spatiale.

Selon l'invention, la caméra est apte à acquérir une ou plusieurs images, de préférence formées de zones claires et/ou sombres, par réflexion ou réfraction sur l'objet inspecté.

Toujours selon l'invention, le traitement d'images est apte à combiner les caractéristiques de plusieurs images saisies dans des conditions différentes pour en tirer des informations d'inspection ou sur les propriétés optiques de l'objet.

Dans le cas de la détermination du contour d'un objet, le contour est de préférence celui d'une lentille, de préférence encore le contour du segment d'une lentille multifocale.

Avantageusement, l'appareil de l'invention comprend des moyens pour l'analyse des propriétés chromatiques, de la transmissivité et de la réflectivité, éventuellement non homogènes ou anisotropes, de l'objet.

Toujours avantageusement, l'appareil de l'invention comprend des moyens pour un changement flexible et/ou rapide du type de méthode utilisé, telle que champ noir ou clair, partiel ou non, alternances, méthode de schlieren, méthode du couteau, utilisation de zone(s) essentiellement ponctuelle(s) comme source(s) lumineuse.

L'appareil de l'invention peut encore comprendre avantageusement des moyens pour l'ajustement de l'image ou des images obtenues de manière à fournir des caractéristiques de paramètres liés à des défauts, comme par exemple la diffusivité ou l'amplitude d'une déformation.

Avantageusement, le SLM équipant l'appareil de l'invention est polarisé ou polarisable, la polarisation du SLM étant utilisable pour obtenir des informations sur l'état de polarisation de la lumière réfléchie ou réfractée par l'objet.

De préférence, on peut prévoir des moyens pour la détermination de l'effet de réflexion sur le front d'onde, par exemple au niveau de la courbure anisotrope ou la distance de la surface, ou l'effet de réfraction, par exemple concernant la puissance optique, par l'analyse de grossissements ou décalages locaux ou globaux.

Avantageusement, l'appareil de l'invention comprend un ou plusieurs dispositifs optiques annexes supplémentaires tel que miroir, séparateur (beam splitter), séparateur de champs, lentille, masque, réseau de motifs périodiques ou non.

Toujours avantageusement, l'appareil comprend des moyens pour le contrôle d'objets par effet Moiré.

L'appareil de l'invention permet encore la mise en oeuvre de la prise d'images multiples et leur traitement, par exemple leur combinaison et/ou leur décalage les unes par rapport aux autres.

De préférence, il permet l'analyse des images obtenues après un balayage complet mono- ou bi-dimensionnel sur au moins une fraction de période d'un motif.

De manière générale, l'appareil selon l'invention comprend des moyens de combinaison, filtrage, analyse, affichage d'images, fournissant in fine des résultats sous forme qualitative ou quantitative relatifs aux caractéristiques optiques des objets inspectés et/ou de leurs défauts.

### Brève description des figures

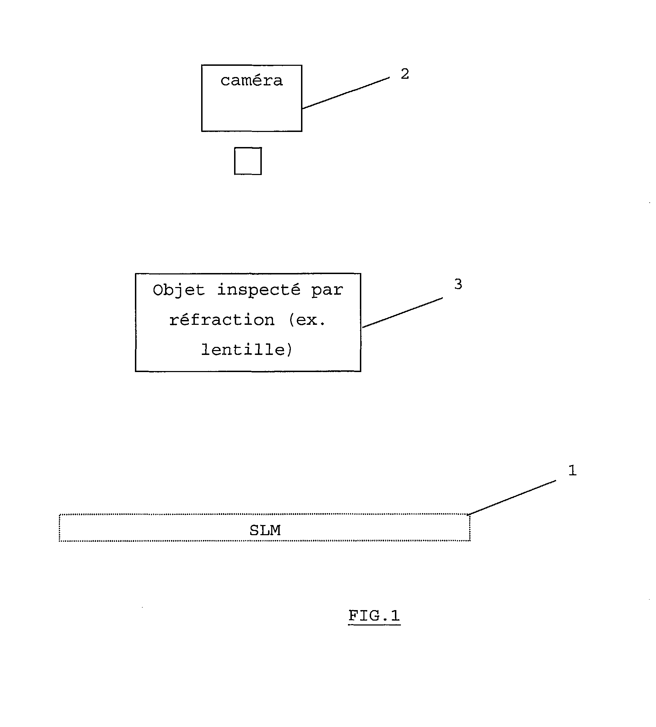

La figure 1 représente très schématiquement le dispositif selon la présente invention dans le cas de l'inspection d'un objet par réfraction, par exemple une lentille.

### Description d'une forme d'exécution préférée de l'invention

Comme représenté très schématiquement sur la figure 1, la présente invention se rapporte à l'utilisation d'un modulateur de lumière spatial (*spatial light modulator*) ou SLM 1, par exemple un écran d'affichage à cristaux liquides (LCD), fournissant de façon flexible, variable et précise, un dispositif d'éclairage associé à une caméra 2, par exemple CCD ou CMOS, équipée ou non d'un objectif, pour effectuer l'inspection d'un objet optique 3, notamment par exemple une détection de défauts, une lecture de marquages (moulés ou gravés), un relevé de discontinuité (bord de lentille), un contour de segment d'une lentille multifocale, une mesure des propriétés optiques et ce, par génération de mires appropriées ou par projection de points de taille appropriée à des positions choisies ad hoc.

De manière la plus générale, un SLM est un dispositif d'éclairage permettant une commande digitale ou analogique de l'intensité lumineuse et de la couleur locale qu'il produit, transmet ou réfléchit en tout point, éventuellement dans une direction déterminée.

Habituellement, un SLM est un dispositif électro-optique comprenant un réseau 1D ou 2D, et éventuellement 3D, de pixels utilisables en réflexion ou en transmission et qui peuvent être activés individuellement et instantanément, par des moyens optiques, électriques, etc. Chacun de ces pixels peut moduler la phase et/ou l'intensité de la lumière qui se propage à travers lui ou par réflexion sur lui. Le plus souvent, les SLM sont réalisés en utilisant des afficheurs à cristaux liquides (LCD), mais l'invention peut également être mise en oeuvre en utilisant un dispositif d'éclairage analogique.

Selon une forme d'exécution préférée de l'invention, l'installation se compose d'un système de vision artificielle, comprenant une caméra éventuellement associée à un objectif, un système de digitalisation d'images et un processeur d'images, ce système de vision artificielle étant couplé à un afficheur LCD programmable, muni éventuellement de miroirs si nécessaire, pour étendre le champ d'observation. L'image de l'afficheur est observée, après réflexion ou transmission, par le système de vision artificielle via la caméra.

Par exemple, on utilisera une caméra CCD vidéo CCIR de 752x582 pixels, équipée d'un objectif de focale 50 mm. Le SLM peut être un afficheur LCD SVGA 800x600 pixels affichant un motif périodique tel que des lignes alternativement blanches et noires, de phase variable. Pour l'acquisition et le traitement, y compris le moyennage d'images, on utilisera un PC équipé d'une carte vision et d'une carte d'affichage pour LCD, comme il en existe dans l'état de la technique.

Lorsque ce dispositif est correctement utilisé, il fournit des résultats de qualité très grande, voir inégalée, pour la détection des défauts d'aspect, grâce à une exploitation judicieuse, simple et rapide des images éventuellement multiples obtenues avec des mires appropriées.

Le synchronisme entre le système de prise d'images et l'afficheur peut être réalisé simplement, sans dispositif supplémentaire. Il est possible par ce dispositif de varier le type de méthode utilisée (champs noirs partiels, champs clairs, alternances noir et blanc, projections à partir de plusieurs points de positionnement avec ajustement en fonction du produit ou du type de défaut, etc.

Pour un type de méthode donnée, les divers réglages, que l'on peut effectuer à loisir sur les mires et les combinaisons d'images (analyse), permettent de modifier les divers paramètres influençant d'une part la sensibilité de la détection et d'autre part l'allure de l'image des défauts en fonction de leur type. Cette technique permet une caractérisation, une identification et une détection sensible.

Le contrôle optique peut aussi être réalisé en utilisant le principe décrit sous a) ci-dessus avec un avantage de flexibilité pour ce qui concerne la forme et le positionnement de la ou des sources de lumière, ou en utilisant le principe décrit sous b) ci-dessus avec un avantage de flexibilité pour la réalisation d'un ou plusieurs motifs et possibilité d'adapter le pas de la mire, d'afficher des repères particuliers pour identifier le décalage absolu de l'image observée, par ailleurs, connu seulement à un multiple entier près de pas du motif en cas de motif périodique, etc.

Le contrôle optique des pièces peut être aussi effectué via mise en oeuvre de techniques de Moiré, les mires étant choisies pour permettre le phénomène d'interférence entre, d'une part, un réseau séparé ou le capteur CCD de la caméra de contrôle et, d'autre part, le motif affiché.

Enfin, les propriétés relatives à l'information de couleur peuvent être déterminées par analyse des niveaux de gris obtenus pour diverses couleurs de l'afficheur et la polarisabilité éventuelle de la lumière émise par l'afficheur, comme c'est le cas par exemple pour un afficheur LCD, peut être exploitée pour vérifier les propriétés du produit en fonction de son orientation.

Avantageusement, selon l'invention, on peut ainsi détecter des défauts de toutes natures en fonction notamment de l'échelle des discontinuités ou des imperfections de surface : microscopique pour des défauts diffusants, de l'ordre de 0,1 mm de taille pour la plupart des défauts de distorsion de surface dus à des inclusions ou des marquages, voire plusieurs mm ou plus pour certaines déformations de surface.

## Revendications

1. Appareil pour l'inspection optique ou la mesure de propriétés optiques, géométriques ou colorimétriques d'un objet transparent, translucide ou réfléchissant, y compris présentant une réflexion diffusante, de préférence pour la détection de défauts déviant ou diffusant la lumière, la lecture de marquages moulés ou gravés, le relevé de discontinuités à la surface de l'objet, le relevé du contour de l'objet ou pour effectuer une mesure de propriétés optiques ou géométriques de l'objet, éventuellement anisotropes, telles que sa puissance optique, sa courbure ou sa couleur, ledit appareil comprenant des moyens d'éclairage et un système de vision artificielle associé, ledit objet étant spatialement interposé entre les moyens d'éclairage et le système de vision artificielle, **caractérisé en ce que** les moyens d'éclairage comprennent des moyens électro-optiques programmables pour produire une source de lumière flexible, c'est-à-dire variable dans l'espace, selon une, deux ou trois dimensions, variable dans le temps, de préférence variable du point de vue de son intensité en fonction de la longueur d'onde, et précise, lesdits moyens programmables étant aptes à générer un motif, tel qu'une mire, un fond lumineux ou une pluralité de points ou taches de taille adaptée aux caractéristiques de l'objet examiné, une image dudit motif pouvant être obtenue par réflexion ou transmission via ledit objet observable au moyen du système de vision artificielle.

2. Appareil selon la revendication 1, **caractérisé en ce que** lesdits moyens électro-optiques programmables comprennent un modulateur de lumière spatial (SLM) 1D, 2D ou 3D.

3. Appareil selon la revendication 2, **caractérisé en ce que** le modulateur de lumière spatial (SLM) est de type afficheur à cristaux liquides (LCD).

4. Appareil selon la revendication 1, 2 ou 3, **caractérisé en ce que** le système de vision artificielle comprend un capteur d'images ou une caméra linéaire ou matriciel(le), couplé(e) à un système de traitement d'images, ou encore un écran de projection directe ou indirecte.

5. Appareil selon la revendication 4, **caractérisé en ce que** ladite caméra comprend un objectif ou non et est de préférence digitale de type CCD ou CMOS.

6. Appareil selon l'une quelconque des revendications précédentes, **caractérisé en ce que** le motif comprend un fond lumineux comportant une intensité et au moins une couleur, de préférence variables en fonction du temps et/ou de la position spatiale.

7. Appareil selon l'une quelconque des revendications précédentes, **caractérisé en ce que** la caméra est apte à acquérir une ou plusieurs images, de préférence formées de zones claires et/ou sombres, par réflexion ou réfraction sur l'objet inspecté.

8. Appareil selon l'une quelconque des revendications précédentes, **caractérisé en ce que** le traitement d'images est apte à combiner les caractéristiques de plusieurs images saisies dans des conditions différentes pour en tirer des informations d'inspection ou sur les propriétés optiques de l'objet.

9. Appareil selon l'une quelconque des revendications précédentes, **caractérisé en ce que** le contour de l'objet est le contour d'une lentille, de préférence le contour du segment d'une lentille multifocale.

10. Appareil selon l'une quelconque des revendications précédentes, **caractérisée en ce qu'**il comprend des moyens pour l'analyse des propriétés chromatiques, de la transmissivité et de la réflectivité, éventuellement non homogènes ou anisotropes, de l'objet.

11. Appareil selon l'une quelconque des revendications précédentes, **caractérisé en ce qu'**il comprend des moyens pour un changement flexible et/ou rapide du type de méthode utilisé, telle que champ noir ou clair, partiel ou non, alternances, méthode de schlieren, méthode du couteau, utilisation de zone(s) essentiellement ponctuelle(s) comme source(s) lumineuse.

12. Appareil selon l'une quelconque des revendications précédentes, **caractérisé en ce qu'**il comprend des moyens pour l'ajustement de l'image ou des images obtenues de manière à fournir des caractéristiques de paramètres liés à des défauts, comme par exemple la diffusivité ou l'amplitude d'une déformation.

13. Appareil selon l'une quelconque des revendications 2 à 12, **caractérisé en ce que** le SLM est polarisé ou polarisable, la polarisation du SLM étant utilisable pour obtenir des informations sur l'état de polarisation de la lumière réfléchie ou réfractée par l'objet.

14. Appareil selon la revendication 1, **caractérisé en ce qu'**il comprend des moyens pour la détermination de l'effet de réflexion sur le front d'onde, par exemple au niveau de la courbure anisotrope ou la distance de la surface, ou l'effet de réfraction, par exemple concernant la puissance optique, par l'analyse de grossissements ou décalages locaux ou globaux.

15. Appareil selon l'une quelconque des revendications précédentes, **caractérisé en ce qu'**il comprend un ou plusieurs dispositifs optiques annexes supplémentaires tel que miroir, séparateur (beam splitter), séparateur de champs, lentille, masque, réseau de motifs périodiques ou non.

16. Appareil selon l'une quelconque des revendications précédentes, **caractérisé en ce qu'**il comprend des moyens pour le contrôle d'objets par effet Moiré.

17. Appareil selon l'une quelconque des revendications précédentes, **caractérisé en ce qu'**il comprend des moyens pour la prise d'images multiples et leur traitement, par exemple leur combinaison et/ou leur décalage les unes par rapport aux autres.

18. Appareil selon l'une quelconque des revendications précédentes, **caractérisé en ce qu'**il comprend des moyens pour l'analyse des images obtenues après un balayage complet mono- ou bi-dimensionnel sur au moins une fraction de période d'un motif.

19. Appareil selon l'une quelconque des revendications précédentes, **caractérisé en ce qu'**il comprend des moyens de combinaison, filtrage, analyse, affichage d'images, fournissant in fine des résultats sous forme qualitative ou quantitative relatifs aux caractéristiques optiques des objets inspectés et/ou de leurs défauts.
